# EUROPÄISCHE PATENTSCHRIFT

(11) **EP 3 545 768 B1**
(45) Veröffentlichungstag und Bekanntmachung des Hinweises auf die Patenterteilung: **13.05.2020**
(21) Anmeldenummer: 18165177.9
(22) Anmeldetag: 29.03.2018
(51) Int. Cl.: A22C 11/12

(54) **VORRICHTUNG UND VERFAHREN ZUM ABBINDEN VON EINER IN EINE HAUT GEFÜLLTEN MASSE**
DEVICE AND METHOD FOR TYING A MASS PACKED IN A CASING
DISPOSITIF ET PROCÉDÉ À LIER UNE MASSE ENSACHÉE EN BOYAUX

(43) Veröffentlichungstag der Anmeldung: 02.10.2019
(73) Patentinhaber: Inotec GmbH Maschinenentwicklung und Vertrieb, 72770 Reutlingen (DE)
(72) Erfinder: Pedroia, Luigi, 6572 Quartino (CH); Pedroia, Stefano, 6572 Quartino (CH)
(74) Vertreter: Patentanwälte und Rechtsanwalt Weiß, Arat & Partner mbB

(56) Entgegenhaltungen:
- EP-A1- 0 499 579
- EP-A1- 0 865 732
- DE-A1- 1 632 142
- DE-A1-102014 110 153

## Beschreibung

### Technisches Gebiet

Die vorliegende Erfindung betrifft eine Vorrichtung und ein Verfahren zum Abbinden von einer in eine Haut gefüllten Masse gemäss den unabhängigen Patentansprüchen.

### Stand der Technik

Derartige Vorrichtungen und Verfahren sind bereits in vielfältiger Form und Ausgestaltung bekannt und gebräuchlich. So offenbart beispielsweise die DE 10 2014 110 153 A1 eine Vorrichtung und ein Verfahren zum Abbinden von Würsten an einem Wurststrang. Zum Abbinden der Würste umfasst die dort offenbarte Vorrichtung einen drehbaren Tragring, auf dem sich ein Käfig und ein Gegengewicht befinden. Der Käfig beherbergt eine Fadenrolle und somit den zum Abbinden verwendeten Faden. Das Gegengewicht dient dazu, eine Unwucht zu vermeiden, welche der Käfig bei Drehung des Tragrings verursachen würde. Die DE 10 2014 110 153 A1 befasst sich mit dem Problem, dass durch Verbrauch des Fadens im laufenden Betrieb das Gewicht des Käfigs abnimmt. Wenn das Gegengewicht beispielsweise auf das Gewicht des Käfigs mit darin befindlicher unverbrauchter bzw. voll gefüllter Fadenrolle abgestimmt ist, so kommt es im laufenden Betrieb zu einer sich stetig vergrössernden Unwucht durch das abnehmende Gewichts der Fadenrolle.

Zur Lösung dieser zwangsweise während eines Verbrauchs des Fadens auftretenden Unwuchtproblematik schlägt die DE 10 2014 110 153 A1 vor, die Lage des Gegengewichts im laufenden Betrieb so anzupassen, dass eine durch Verbrauch des Fadens bewirkte Unwucht kompensiert wird.

Damit wird die Unwucht zwar erfolgreich beseitigt, allerdings weist die Maschine dennoch folgende Nachteile auf:
Um Stillstandszeiten der Maschine zu verhindern ist es ein Ziel der Maschinenentwicklung, möglichst grosse Fadenrollen mit möglichst langen Fäden in den Käfig laden zu können. Da allerdings der mit einer vollen Fadenrolle beladene Käfig zusammen mit dem auf sein Gewicht abgestimmten Gegengewicht einen massgeblichen Einfluss auf das zur Drehung des Tragrings nötige Drehmoment ausübt, ist die maximale Länge des Fadens deutlich limitiert. Schliesslich kann das vom Antrieb bereitgestellte Drehmoment nicht beliebig erhöht werden.

Das Gewicht einer Bindfadenrolle, welche in einer Vorrichtung gemäss der DE 10 2014 110 153 A1 verwendet wird, liegt beispielsweise bei etwa 150 Gramm. Bei einem üblichen Gewicht von etwa 0,5 Gramm je Meter Faden befinden sich auf einer solchen Rolle etwa 270 Meter Faden. Derartige Abbindemaschinen laufen üblicherweise mit sehr hohen Durchsätzen, pro Minute werden oftmals bis zu 300 Würste abgebunden. Die Fadenrolle muss daher relativ häufig gewechselt werden

Natürlich ist es mit bekannten konstruktiven Massnahmen möglich, die Vorrichtung dahingehend zu optimieren, dass Fadenrollen mit grösserem Gewicht und somit längerem Faden verwendet werden können, indem beispielsweise stabilere - und damit meist teurere - Einzelteile und Materialien verbaut werden. Dennoch bleibt die Limitierung durch das Drehmoment, welches der Antrieb maximal bereitstellen kann, erhalten.

Ferner gilt, dass Unwuchtprobleme bei schwereren Fadenrollen schwerwiegende Folgen haben können. Kommt es bei einer Maschine gemäss der DE 10 2014 110 153 A1, welche mit einer sehr schweren Fadenrolle beladen ist, zu einem Unwuchtproblem, weil beispielsweise das positionsveränderliche Gegengewicht fehlerhaft arbeitet, so können die Schäden an der Maschine sehr gross sein. Auch auf Grund dieses mit steigendem Gewicht der Fadenrolle steigenden Schadensrisikos wird nicht versucht, die Vorrichtung ausschliesslich hinsichtlich möglichst schwerer Fadenrollen zu optimieren.

Weiterhin ist es natürlich stets ein Ziel der Maschinenentwicklung, das vom Antrieb aufzubringende maximale Drehmoment so niedrig wie möglich zu halten, um etwaige Belastungen, einen Verschleiss, eine nötige Stabilität der verbauten Teile und einen Energieverbrauch möglichst gering zu halten. Es versteht sich von selbst, dass die beiden vorgenannten Ziele einander konträr gegenüberstehen und das Erreichen von einem der beiden Ziele das Erreichen des anderen Ziels ausschliesst.

Aus der EP 0 865 732 A1 ist eine weitere Maschine zum Abbinden von Würsten bekannt. Dort wird vorgeschlagen, eine konzentrisch zu der abzubindenden Wurstkette auf dem Rotor bzw. Tragring angeordnete Spule einzusetzen, auf welcher der Faden bzw. die Schnur aufgewickelt ist. Da wegen der konzentrischen Ausgestaltung bei einer Drehbewegung Unwuchtprobleme vermieden werden, sei es möglich, die Schnur- bzw. Fadenlänge um das 10-fache im Vergleich zu den zuvor eingesetzten Schnurlängen zu erhöhen.

Somit kann gemäss der EP 0 865 732 A1 beispielsweise eine Fadenrolle mit einem Gewicht von bis zu 1500 Gramm eingesetzt werden. Es hat sich jedoch gezeigt, dass die in der EP 0 865 732 A1 beschriebene Maschine in der Praxis zahlreiche Probleme bereitet. So war es nicht möglich, die Reibung zwischen der Schnur-Spule und dem Spulenhalter bzw. Rotor so einzustellen, dass zu Beginn der Rotationsbewegung die Schnur-Spule einerseits wie gewünscht in Drehung versetzt wird und andererseits bei Beendigung der Rotationsbewegung unmittelbar zum Stehen kommt. Trägheit und Reibungszahlen konnten nicht in zufriedenstellendem Masse optimiert werden. Hierbei ist natürlich auch zu beachten, dass im laufenden Betrieb bzw. bei Abwicklung und Verbrauch des Fadens zwar keine Unwuchtprobleme auftreten, das Gewicht des auf der Spule vorhandenen Fadens aber sehr wohl abnimmt. Entsprechend nimmt auch benötigte Drehmoment im Betrieb laufend ab. Auch dies beeinflusst Trägheits- und Reibungsverhalten, so dass die Spule sich teilweise mit dem Rotor drehte, je nachdem, wie viel Faden verbraucht war. Diese unvorhersehbare verspätet einsetzende Drehung der Spule bei Drehung des Rotors und die ebenso unvorhersehbare Weiterdrehung der Spule bei stillstehendem Rotor kann zu unerwünschter Abwicklung des Fadens mit Verknäuelungen sowie zu unerwünschtem Zug auf den Faden mit entsprechender Belastung oder sogar Rissgefahr führen.

Da die Spule sich teilweise mit dem Rotor drehte war es unmöglich, das Drehmoment und die Drehgeschwindigkeit so einzustellen, dass ein zuverlässiger Betrieb sowohl unmittelbar nach Bestücken der Vorrichtung mit einer neuen Fadenrolle als auch bei annähernd vollständig verbrauchter Fadenrolle zu gewährleisten. Durch die Trägheit der Spule, welche sich durch Verbrauch des Fadens im Betrieb laufend änderte, war ein zuverlässiges Starten und Stoppen der Rotationsbewegung nicht in den Griff zu bekommen.

Ferner wurde angedacht, die Maschine so auszugestalten, dass die Schnur-Spule sich nur in sehr geringem Umfang mit dem Spulenhalter dreht. Auch diesbezüglich schlugen Optimierungsversuche hinsichtlich Reibungszahlen und Trägheit der sehr schweren Spule jedoch fehl. Obwohl es nicht gewünscht war, konnte ein Mitdrehen der Spule nicht verhindert werden.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Merkmale nach dem Anspruch 1.

Vorteilhafte Ausgestaltungen sind in den Unteransprüchen beschrieben.

Eine Vorrichtung zum Abbinden mehrerer Portionen von einer in eine Haut gefüllten Masse an dafür vorgesehenen Abbindestellen mit einem Faden gemäss einem ersten Ausführungsbeispiel der vorliegenden Erfindung umfasst einen Rotor. Bei der Haut kann es sich um Darm, Kunstdarm oder dergleichen handeln. Bei der Masse handelt es sich insbesondere um Nahrungsmittel, beispielsweise Fleisch, Fleischersatz, Brät oder dergleichen. Vorzugsweise dient die Vorrichtung also dazu, einzelne Portionen bzw. Würste abzubinden, nachdem die entsprechende Masse in die Haut eingefüllt wurde. Besonders bevorzugt dient die Vorrichtung sowohl einem Einfüllen als auch dem Abbinden der Portionen bzw. Würste, somit also einem Portionieren.

Der Rotor wird teilweise auch als Tragring bezeichnet.

Die vorgenannte Maschine umfasst ferner eine mit dem Rotor in Verbindung stehende Führungseinrichtung zur Führung des Fadens. Bei der Führungseinrichtung kann es sich beispielsweise um eine oder mehrere Durchlass- bzw. Führungs-Öffnungen handeln, wie sie in der EP 0 865 732 A1 beschrieben sind. Diese können ein Teil einer nachstehend näher beschriebenen und optional vorhandenen Bremse sein. Vorzugsweise ist die Führungseinrichtung aussen am Umfang des Rotors angebracht.

Der Rotor umfasst einen Aufnahmeabschnitt zur Aufnahme mehrere Wicklungen des Fadens. Der Aufnahmeabschnitt kann ein Teil einer Mantelfläche des zumeist im Wesentlichen zylinderförmigen Rotors bzw. eines zylinderförmigen Abschnitts des Rotors sein.

Die Vorrichtung ist hierbei so eingerichtet, dass der Faden bei einer Umdrehung des Rotors von dem Aufnahmeabschnitt durch die Führungseinrichtung geleitet und um die Abbindestelle gewickelt wird.

Die Vorrichtung verfügt ferner über ein Reservoir zur Aufnahme des Fadens. Dieses Reservoir ist separat von dem Rotor ausgebildet und ist insbesondere nicht drehfest mit dem Rotor verbunden.

Das Reservoir kann verschiedenartig ausgestaltet sein und eine oder mehrere Einrichtungen umfassen. Im einfachsten Fall handelt es sich bei dem Reservoir um eine Fadenrolle bzw. Spule, welche drehbar gelagert sein kann und einen Fadenvorrat aufbewahrt. Diese Spule kann beispielsweise passiv gedreht werden, wenn die Zuführeinrichtung dem Aufnahmeabschnitt den benötigten Faden zuführt. Die Fadenrolle bzw. Spule kann auch statisch sein, so dass sie sich im Betrieb nicht dreht, wobei der Faden im Betrieb von der stillstehenden Fadenrolle abgezogen wird. Vorzugsweise umfasst das Reservoir zusätzlich zu der Fadenrolle eine Ausgleichsvorrichtung, welche der Aufnahme von Faden dient, den die Zuführeinrichtung von dem Aufnahmeabschnitt entfernt. Die Ausgleichsvorrichtung kann ein einfacher Ausgleichsbehälter sein. Ferner kommt auch eine Spule als Ausgleichsbehälter in Betracht. So kann beispielsweise an eine Spule gedacht sein, welche über einen Antrieb gedreht wird und den Faden, welcher von der Zuführeinrichtung von dem Aufnahmeabschnitt entfernt wird, aufwickelt, um unerwünschtes Verschlingen oder Verknäueln des Fadens in der Ausgleichsvorrichtung zu verhindern. Alternativ oder komplementär kann die Spule, welche den Fadenvorrat aufbewahrt, auch aktiv gedreht, d.h. mit einem Antrieb versehen sein.

Die Vorrichtung verfügt weiterhin über eine Zuführeinrichtung, welche eingerichtet ist, um entweder Faden aus dem Reservoir zu dem Aufnahmeabschnitt zuzuführen oder von dem Aufnahmeabschnitt zu entfernen.

Bei der Zuführeinrichtung kann es sich um eine beliebige Einrichtung handeln, welche geeignet ist, einen Faden zuzuführen. Beispielsweise kann an ein Walzen- oder Rollenpaar, an ein Zahnradpaar, an eine Spule oder dergleichen gedacht sein.

Für die Führungseinrichtung und auch für sämtliche andere an dem Rotor befestigte Einrichtungen und Bauteile gilt, dass ihnen jeweils möglichst ein Gegengewicht zugeordnet ist, um Unwuchtprobleme zu vermeiden.

Ein Entfernen des Fadens erfolgt vorzugsweise, indem die Zuführeinrichtung rückwärts läuft.

Es kann daran gedacht sein, dass der Aufnahmeabschnitt selbst geeignet ist, mehrere Wicklungen des Fadens aufzunehmen, beispielsweise kann eine Mantelfläche eines zylindrischen Teils des Rotors als Aufnahmeabschnitt fungieren. Alternativ kann daran gedacht sein, dass der Aufnahmeabschnitt eine Spule oder einen Ring oder dergleichen aufnimmt, welcher wiederum mehrere Windungen des Fadens aufnehmen kann.

Die Vorrichtung kann eine Bremse umfassen, welche dem Rotor zugeordnet ist. Eine solche Bremse ist vorzugsweise aussen am Rotor angeordnet. Die Bremse kann die Führungseinrichtung umfassen oder separat von ihr ausgebildet sein. Um das Auftreten von Unwuchtproblemen zu vermeiden, kann gegenüber der Bremse ein Gegengewicht am Rotor angebracht sein. Hierbei kann auch daran gedacht sein, anstelle eines Gegengewichts eine zweite Bremse vorzusehen, um der Unwuchtproblematik vorzubeugen. Wie dies in der EP 0 865 732 A1 beschrieben ist, kann eine solche zweite Bremse beispielsweise auf einen alternativen Fadentyp eingestellt sein oder beispielsweise eine alternative Bremskraft aufweisen. Somit sorgt eine solche zweite Bremse einerseits für den nötigen Gewichtsausgleich und reduziert andererseits den Aufwand für Anpassungen von Bremskraft oder anderen Teilen der Bremse in Bezug auf den zu verwendenden Faden. Nach einem Fadenwechsel kann einfach die zweite Bremse genutzt werden.

Weitere Einzelheiten und insbesondere Funktionen der vorgenannten Ausführungsbeispiele der Vorrichtung werden in Bezug auf die nachstehenden Ausführungsbeispiele des erfindungsgemässen Verfahrens erläutert.

Ein Verfahren zum Abbinden mehrerer Portionen von einer in eine Haut gefüllten Masse an dafür vorgesehenen Abbindestellen gemäss einem Ausführungsbeispiel der vorliegenden Erfindung erfolgt mit einer vorstehend beschriebenen Vorrichtung.

Das nachfolgende Einfüllen der Masse in die Haut sowie das Verdrängen der Masse an den gewünschten Abbindestellen kann vorzugsweise auch von der vorstehend geschilderten Maschine bewirkt werden und entsprechend vorzugsweise auch Teil des nachfolgend geschilderten Verfahrens sein. Hierfür kann die erfindungsgemässe Vorrichtung beispielsweise mit einer Einfüllvorrichtung ausgestattet sein.

Das Verfahren umfasst folgende Schritte:
- Positionieren einer ersten Abbindestelle
- Drehung des Rotors in einer ersten Drehrichtung und gleichzeitiges Vorschieben des Fadens durch die Zuführeinrichtung, wobei die Zuführeinrichtung Faden aus dem Reservoir auf den Aufnahmeabschnitt führt und wobei durch die Drehung des Rotors Faden von dem Aufnahmeabschnitt durch die Führungseinrichtung zur Abbindestelle geführt und während der Drehung des Rotors um die Abbindestelle gewickelt wird
- Positionieren einer zweiten Abbindestelle und gleichzeitiges Vorschieben des Fadens durch die Zuführeinrichtung, um den Abstand zwischen der ersten und der zweiten Abbindestelle zu überbrücken
- Drehung des Rotors in einer zweiten Drehrichtung entgegen der ersten Drehrichtung und gleichzeitiges Zurückschieben des Fadens durch die Zuführeinrichtung, wobei die Zuführeinrichtung Faden aus dem Aufnahmeabschnitt entfernt und wobei durch die Drehung des Rotors Faden von dem Aufnahmeabschnitt durch die Führungseinrichtung zur Abbindestelle geführt und während der Drehung des Rotors um diese gewickelt wird.

Unter einem Positionieren der Abbindestelle wird beispielsweise verstanden, dass die Haut, beispielsweise auf die nachfolgend näher erläuterte Weise, so bewegt wird, dass die vorgesehene bzw. gewünschte Abbindestelle so liegt, dass das Abbinden mit Hilfe der erfindungsgemässen Vorrichtung bzw. durch das erfindungsgemässe Verfahren erfolgen kann.

Beispielsweise wird die Haut bzw. die Wurstkette beim Positionieren so ausgerichtet, dass ein aus der Führungseinrichtung austretender Faden bei einer Rotation des Rotors die Abbindestelle umschlingt.

Vor oder während des Positionierens muss die Abbindestelle geschaffen werden. Typischerweise erfolgt eine Axialbewegung von beispielsweise einer entstehenden Wurstkette innerhalb der Vorrichtung durch das Einfüllen der Masse in die Haut. Die Haut liegt hierbei beispielsweise in geraffter Form oder als Darmraupe vor, dies ist aus dem Stand der Technik bekannt. Die Abbindestelle wird vorzugsweise während des Füllvorgangs geschaffen. Dies geschieht beispielsweise, indem geeignete Verdrängerpaare an der vorgesehenen Abbindestelle radial auf die Haut zu geführt werden, und zumindest eines der Verdrängerpaare, welches entsprechend als dynamisches Verdrängerpaar bezeichnet wird, sich sodann axial bewegt, um die Abbindestelle zu schaffen. Ein solcher Verdrängungsvorgang ist beispielsweise in den eingangs genannten Dokumenten aus dem Stand der Technik beschrieben. So dienen beispielsweise die Hebel bzw. Klemmzangen der EP 0 865 732 A1 der Verdrängung der Masse.

Vorzugsweise ergibt sich das Positionieren der Abbindestelle von selbst, indem ein gewichtsgesteuertes bzw. gewichtsgenaues Portionieren der einzelnen Würste oder dergleichen erfolgt. Hierbei wird beispielsweise vorab ein SollGewicht einer Wurst eingestellt. Über eine Einfüllvorrichtung, insbesondere über ein Einfüllrohr, wird die gewünschte Portion der Masse in die Haut eingefüllt, bis diese Portion das Sollgewicht erreicht hat. Hierbei bewegt sich die Haut vorzugsweise allein durch die Masse, welche in sie eintritt. Die Haut liegt hierbei beispielsweise in Form eines gerafften Darms oder dergleichen vor und ist vorzugsweise über das Einfüllrohr gestülpt. Nachdem die gewünschte Portion mit dem Sollgewicht in die Haut gefüllt wurde, erfolgt das Abbinden.

Die gewichtsgesteuerte Portionierung ist bekannt. Hierbei können beliebige Mittel eingesetzt werden, um festzustellen, wann eine dem Sollgewicht entsprechende Menge der Masse eingefüllt wurde.

Bei der Drehung des Rotors in der ersten Drehrichtung handelt es sich vorzugsweise nicht um eine einzelne volle Umdrehung, sondern um mehrere Umdrehungen. Beispielsweise kann an 1 bis 20 Umdrehungen gedacht sein. Hierbei ist zu beachten, dass für jede volle Umdrehung des Rotors in jedem Fall eine Wicklung des Fadens um die Abbindestelle geschlungen wird. Gleichzeitig wird für jede volle Umdrehung des Rotors eine Wicklung des Fadens auf den Aufnahmeabschnitt aufgewickelt bzw. von diesem abgewickelt/entfernt, je nachdem, in welcher Richtung sich der Rotor dreht und je nachdem, ob sich bereits Wicklungen des Fadens auf dem Aufnahmeabschnitt befinden.

Die Vorteile des erfindungsgemässen Verfahrens werden insbesondere dann voll ausgeschöpft, wenn jeweils gleich viele Drehungen in der ersten und in der zweiten Drehrichtung durchgeführt werden. Dadurch wird sichergestellt, dass alle Fadenwicklungen, welche auf den Aufnahmeabschnitt aufgewickelt werden, bei der gegensinnigen Drehung des Rotors wieder abgewickelt werden. Somit wird maximal das Gewicht aufgenommen, welches einem Gewicht des Fadenabschnitts entspricht, der sich aus den durchgeführten Umdrehungen in einer Drehrichtung ergibt.

Bei der ersten Drehrichtung kann es sich um eine Rechts-Drehung handeln, während die zweite Drehrichtung einer Links-Drehung entspricht.

Das Überbrücken des Abstands zwischen den Abbindestellen während des Einfüllvorgangs der Wurstkette oder dergleichen erfolgt dergestalt, dass beispielsweise zwischen den Abbindestellen zweier nacheinander abgebundener Würste ein Stück Faden als Verbindungs-Stück mitgeschleppt wird. Würste und dergleichen werden üblicherweise so abgebunden, dass der Faden fest um die Abbindestellen gewickelt und zwischen den Abbindestellen entlang der Würste schlaff mitgeführt wird. Dieses Mitschleppen des Fadens bzw. der Schnur ist in der EP 0 865 732 A1 beschrieben.

Vorzugsweise umfasst das erfindungsgemässe Verfahren bzw. die erfindungsgemässe Vorrichtung die bereits erwähnte Einfüllvorrichtung, welche strukturell und funktionell in der EP 0 865 732 A1, insbesondere in Bezug auf die Figur 10, beschrieben ist.

Vorzugsweise ist daran gedacht, dass nach der Drehung des Rotors in der zweiten Drehrichtung eine Vielzahl weiterer Abbindestellen positioniert und abgebunden werden, wobei eine dritte und alle weiteren ungeradzahligen Abbindestellen identisch gehandhabt werden wie die erste Abbindestelle und wobei eine vierte und alle weiteren geradzahligen Abbindestellen identisch gehandhabt werden wie die zweite Abbindestelle. Zwischen den Abbindestellen wird der Faden vorzugsweise mitgeschleppt wie oben beschrieben.

Es kann daran gedacht sein, dass die Abbindestellen vor oder während des Positionierens geschaffen werden, indem Masse innerhalb der Haut von der gewünschten Abbindestelle verdrängt wird. Geeignete Einrichtungen zur Verdrängung der Masse sind bekannt und beispielsweise in Form der Verdrängerpaare bzw. Hebel bzw. Klemmzangen der EP 0 865 732 A1 entnehmbar.

Eine vorstehend bereits erwähnte Bremse kann während der Umwicklung der Abbindestelle angezogen sein, um den Faden zu straffen und während der Positionierung - und somit währen des Mitschleppens des Fadens - gelöst sein, um den Faden schlaff freizugeben und den Abstand zwischen aufeinanderfolgenden Abbindestellen zu überbrücken.

Es kann daran gedacht sein, dass die Zuführeinrichtung komplementär oder alternativ zur vorstehend beschriebenen Bremse den Faden während der Umwicklung der Abbindestelle strafft. Die Zuführeinrichtung allein kann also die Straffung des Fadens in den Zeitintervallen übernehmen, in denen eine solche Straffung gewünscht ist. Sie kann hierbei die Bremse ersetzen.

Ein wesentlicher Vorteil der erfindungsgemässen Vorrichtung sowie des erfindungsgemässen Verfahrens ist darin zu sehen, dass das Gewicht des auf dem Aufnahmeabschnitt befindlichen Fadens, welches ein für den Antrieb des Rotors benötigtes Drehmoment mitbestimmt, gegenüber dem Stand der Technik deutlich reduziert ist. Während gemäss dem Stand der Technik der gesamte Vorrat an Faden stets auf dem Rotor bzw. Tragring gelagert wurde, ist der Fadenvorrat gemäss der vorliegenden Erfindung in das Reservoir ausgelagert. Es wird jeweils nur soviel Faden auf den Aufnahmeabschnitt gewickelt, wie sich zwangsweise aus den vom Rotor durchgeführten Umdrehungen zum Abbinden einer einzelnen Abbindestelle ergibt.

Wie eingangs beschrieben lag das am Rotor gelagerte Gewicht des Fadens bislang zwischen etwa 150 und 1500 Gramm. Obwohl sich das Gewicht des Fadens bei bekannten Vorrichtungen im laufenden Betrieb durch Verbrauch des Fadens reduzierte, müssen die bekannten Vorrichtungen natürlich auf das maximale Gewicht der Rolle, d.h. auf 150 bis 1500 Gramm ausgelegt sein.

Hat der Aufnahmeabschnitt der vorliegenden Erfindung einen Durchmesser von 110 Millimetern und somit einem Umfang von etwa 346 Millimetern und werden 10 Wicklungen um jede Abbindestelle geschlungen, so werden durch die 10 Umdrehungen des Rotors 3460 Millimeter Faden auf den Rotor bzw. auf den Aufnahmeabschnitt gewickelt, was dem maximalen Gewicht des vom Rotor zu tragenden Fadens entspricht. Bei einem Gewicht von 0,5 Gramm je Meter Faden werden weniger als 2 Gramm Faden auf den Rotor gewickelt. Das maximale Gewicht des von dem Rotor zu tragenden Fadens wäre in dem vorstehend beschriebenen typischen Beispiel um etwa das 75-fache bzw. um etwa das 750-fache gesenkt.

Hierdurch kann die Vorrichtung deutlich schneller arbeiten bzw. das Verfahren deutlich schneller durchgeführt werden. Ferner sinken die Stabilitätsanforderungen an die Auslegung des Rotors bzw. der gesamten Vorrichtung, was die Produktion vergünstigt. Da auch die maximale Drehzahl bei der Auslegung der Vorrichtung und des Verfahrens durch das aufzubringende Drehmoment limitiert wird, kann die erfindungsgemässe Vorrichtung mit höherer Drehzahl betrieben werden, was wiederum die Effizienz bzw. den Durchsatz steigert. Hierbei sind Steigerungen bis zu 30 % möglich.

Die Effizienz des Prozesses wird hierbei nicht nur durch höhere Drehzahlen gegenüber bekannten Vorrichtungen und Verfahren erhöht, sondern auch durch die Tatsache, dass eine Häufigkeit, mit welcher der Faden bzw. die Spule wegen Verbrauch erneuert werden muss, deutlich gesenkt werden kann. Dies wiederum vermeidet Stillstandszeiten und erhöht die Effizienz. Der Grund hierfür ist, dass im vorstehend beschriebenen Reservoir deutlich grössere Spulen mit mehreren Kilogramm Gewicht bevorratet werden können. Gegenüber den bekannten Fadenmengen, welche im Bereich von 150 bis 1500 Gramm lagen, bedeutet dies eine enorme Steigerung.

Die Gewichtseinsparung wird noch dadurch verstärkt, dass gemäss der vorliegenden Erfindung auf eine am Rotor anzubringende Spule bzw. Fadenrolle gänzlich verzichtet werden kann. Bei bekannten Vorrichtungen, bei denen sich der gesamte Fadenvorrat in irgendeiner Form auf dem Rotor befindet, wäre es unwirtschaftlich, den Faden beispielsweise mühsam auf den Rotor zu wickeln, um das Gewicht der Spule einzusparen, welche den Faden trägt. Bei der vorliegenden Erfindung muss der Rotor bzw. dessen Aufnahmeabschnitt typischerweise jedoch nur einige Wicklungen des Fadens tragen, welche zudem im laufenden Betrieb abwechselnd auf- und abgewickelt werden. Auf die Spule kann daher problemlos verzichtet und ihr Gewicht kann dementsprechend problemlos eingespart werden, da hierdurch kein mühsames Aufwickeln des Fadens auf den Rotor nötig wird.

Weiterhin ist bei der vorliegenden Erfindung eine Überwachung einer Menge an noch verfügbarem Faden deutlich vereinfacht. Dreht sich der Faden in einem Käfig oder aufgewickelt auf den Rotor mit hoher Geschwindigkeit, wie bei Maschinen gemäss dem Stand der Technik üblich, so ist eine Überwachung des Fadens bzw. des noch verbleibenden Fadenvorrats erschwert. Dies führt dazu, dass sicherheitshalber deutlich vor Verbrauch des Fadens die Maschine gestoppt und der Faden bzw. die Spule ausgetauscht werden. Demgegenüber kann die im Reservoir befindliche Spule, die den Fadenvorrat beherbergt, gemäss der vorliegenden Erfindung jedoch auf sehr einfache Weise und ohne technische Hilfsmittel überwacht werden, da die im Reservoir befindliche Spule sich nur mit sehr geringer Geschwindigkeit bewegt. Ausserdem dreht sich diese Spule nur dann, wenn der Rotor in einer der beiden möglichen Drehrichtungen rotiert, während sie bei einer Drehung in der anderen Drehrichtung stillsteht. Dies vereinfacht die Überwachung der verbleibenden Fadenmenge deutlich.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Figur.

### Ausführungsbeispiel

In der Figur ist eine Vorrichtung zum Abbinden gemäss einem Ausführungsbeispiel der vorliegenden Erfindung gezeigt.

Die Vorrichtung umfasst einen Rotor 1 mit einem Aufnahmeabschnitt 18. Auf den Aufnahmeabschnitt 18 ist ein Ring bzw. eine Spule 2 aufgeschoben, auf den mehrere Wicklungen Faden 10 gewickelt sind. Ferner ist ein Gehäuse 3 und ein Wälzlager 4 erkennbar. Weiterhin sind eine Riemenscheibe 5 und ein Zahnriemen 11 erkennbar. Ausserdem sind Verdrängerpaare 13, 14 dargestellt. Am Rotor 1 ist eine Bremse 6 befestigt.

Weiterhin ist rechts in der Figur ein Einfüllrohr 7 einer nicht dargestellten Einfüllvorrichtung erkennbar, welches in die Haut 8 hineinragt. Links in der Figur sind Würste 19 zu erkennen. Zwischen den Würsten 19 sind eine linksgedrehte Abbindestelle 17 und eine rechtsgedrehte Abbindestelle 16 zu erkennen.

Oben in der Figur sind eine Zuführeinrichtung 9 in Form eines Zahnradpaares, ein Ausgleichsbehälter 12 sowie eine Fadenrolle 15 zu erkennen.

Bezugnehmend auf die Figur erklärt sich die Funktionsweise der erfindungsgemässen Vorrichtung folgendermassen:
Über einen nicht dargestellten Antrieb wird der Zahnriemen 11 in Bewegung versetzt, was wiederum die Drehung des Rotors 1 bewirkt. Diese Anordnung ist bekannt und ihre Funktion ist beispielsweise der EP 0 865 732 A1 zu entnehmen.

Zur Herstellung einer Wurstkette, wie sie links in der Figur dargestellt ist, wird durch das Einfüllrohr 7 die Masse in die Haut 8 eingefüllt. Die Verdrängerpaare bzw. Klemmzangen 13, 14 verdrängen die Masse innerhalb der Haut 8 so, dass an der gewünschten Abbindestelle 16 (rechts der Figur) ein ungefüllter Abschnitt der Haut 8 vorliegt. Die Funktion der Verdrängerpaare bzw. Klemmzangen 13, 14 ist in der EP 0 865 732 A1 beschrieben. Durch Drehung des Rotors 1 wird die Abbindestelle 16 mit Faden 10 abgebunden, auch dies ist in der EP 0 865 732 A1 beschrieben.

Nach einem Abbinden wird die Wurstkette, weiterbewegt, was in der Figur einer Bewegung nach links entspricht. Diese Weiterbewegung erfolgt vorzugsweise allein durch das Einfüllen der Masse zur Portionierung der nächsten abzubindenden Wurst. Anschliessend wiederholen sich die vorstehend geschilderten Schritte.

Während die vorgenannten Schritte im Wesentlichen aus der EP 0 865 732 A1 bekannt sind, liegt der Kern der Erfindung in einem verbesserten Abbindevorgang, welcher nachstehend geschildert wird.

Genau wie bei der Vorrichtung aus der EP 0 865 732 A1 erfolgt bei der Vorrichtung gemäss dem Ausführungsbeispiel der vorliegenden Erfindung nach der Figur eine Zwangsführung des Fadens 10, sobald der Rotor 1 sich dreht. Der Grund hierfür ist, dass die Führungseinrichtung 20, welche im dargestellten Ausführungsbeispiel einstückig mit der Bremse 6 ausgeführt ist und im Wesentlichen aus zwei Durchgangsöffnungen besteht, bei jeder Umdrehung des Rotors 1 einerseits einen Abschnitt des Fadens 10 um die Abbindestelle 16 schlingt und andererseits einen weiteren Teil des Fadens 10 um den Aufnahmeabschnitt 18 schlingt.

Im Gegensatz zur Vorrichtung gemäss der EP 0 865 732 A1 befindet sich jedoch nicht die gesamte Spule bzw. der gesamte Fadenvorrat auf dem Rotor 1. Der Unterschied der zwischen der erfindungsgemässen Vorrichtung sowie dem erfindungsgemässen Verfahren und der EP 0 865 732 A1 und anderen bekannten Vorrichtungen und Verfahren tritt deutlich zu Tage, wenn man das Abbinden zweier aufeinanderfolgender Abbindestellen betrachtet. Es wird davon ausgegangen, dass sich auf dem Ring 2 noch keine Fadenwicklung befindet. Der Faden 10 wird von der Fadenrolle 15 über die Zuführeinrichtung 9 entlang der Fadenrolle / Ring 2 zur Bremse 6 bzw. durch die dort befindliche Führungseinrichtung 20 zur Abbindestelle geführt.

Für die nachfolgend beschriebenen Schritte wird davon ausgegangen, dass die Abbindestellen jeweils einen Durchmesser von etwa 4 Millimetern aufweisen und dass der Ring 2 einen Durchmesser von etwa 110 Millimetern aufweist.

Nachdem die abzubindende Abbindestelle 16 wie in der Figur gezeigt positioniert wurde, wird die Masse im Bereich der gewünschten Abbindestelle 16 von den Verdrängerpaaren 13, 14 verdrängt. Der Rotor 1 beginnt vorzugsweise während einer axialen Bewegung des dynamischen Verdrängerpaares 14 sich zu drehen. Hierbei vollführt er beispielsweise zehn Drehungen rechtsherum. Der Faden 10 wird somit beispielsweise zehn Mal um die Abbindestelle 16 herumgeführt. Für jede volle Umdrehung wird hierbei ein etwa 13 Millimeter langer Fadenabschnitt um die Abbindestelle 16 gewickelt. Gleichzeitig wird für jede volle Umdrehung ein etwa 346 Millimeter langer Fadenabschnitt um den Ring 2 gewickelt. Die Zuführeinrichtung 9 muss also für jede volle Umdrehung des Rotors 1 etwa 359 Millimeter Faden 10 zur Verfügung stellen, bei zehn Umdrehungen des Rotors 1 also 3590 Millimeter Faden 10.

Hierbei ist zu beachten, dass eine Zwangsführung des Fadens 10 während der Umdrehung des Rotors 1 durch die Führung des Fadens 10 in der Führungseinrichtung 20 erfolgt. Es werden also stets 3590 Millimeter Faden 10 je Umdrehung des Rotors 1 benötigt. Dieser Bedarf ist zunächst unabhängig davon, wie sich der Ring 2 relativ zum Aufnahmeabschnitt 18 bewegt und auch unabhängig davon, wie sich die Fadenwicklungen, welche um den Ring 2 geschlungen werden, relativ zum Ring 2 bewegen oder sich stattdessen mit ihm bewegen. Hierbei sind zahlreiche Ausgestaltungen denkbar. So kann der Ring 2 die Drehung des Rotors 1 mitmachen, was die Aufnahme je einer Wicklung des Fadens 10 auf den Ring 2 pro Umdrehung des Rotors 1 erleichtern kann. Gleichzeitig kann der Faden 10 sich relativ zum Ring 2 stets etwas schneller bewegen, da bei jeder vollen Umdrehung des Rotors 1 ja zusätzlich 13 Millimeter Faden 10 um die Abbindestelle 16 gewickelt werden. Es ist aber auch denkbar, dass keine Relativbewegung zwischen Faden 10 und Ring 2 stattfindet, sondern sich der Ring 2 zwar gleichsinnig mit dem Rotor 1 aber etwas schneller als dieser dreht, um sowohl die 346 Millimeter Faden 10 je Umdrehung aufzunehmen als auch die 13 Millimeter Faden 10 an die Abbindestelle 16 abzugeben. In diesem Fall würde keine Relativbewegung zwischen dem Ring 2 und den um ihn gewickelten Faden 10 stattfinden, beide würden sich mit gleicher Geschwindigkeit drehen.

Vorzugsweise hat der Ring 2 gegenüber dem Rotor 1 ein gewisses Spiel, so dass der Ring 2 sich zwar bei einer Umdrehung des Rotors 1 mit diesem dreht, jedoch insbesondere bei Stillstand des Rotors 1 eine zwischen ihm und dem Rotor 1 herrschende Haftreibung überwindet und sich relativ zum Rotor 1 drehen kann.

Vorzugsweise sorgt die Bremse 6 dafür, dass der Fadenabschnitt zwischen der Abbindestelle 16 und der Bremse 6 straff gespannt ist, was eine straffe Wicklung des Fadens 10 um die Abbindestelle 16 bewirkt und ein Verknäueln oder dergleichen verhindert. Daher ist die Bremse 6 vorzugsweise während der Drehung des Rotors 1 angezogen. Gleiches gilt für den Fadenabschnitt zwischen der Zuführeinrichtung 9 und dem Ring 2, wobei die Zuführeinrichtung 9 für eine Straffung des Fadens 10 sorgt.

Am Ende der vorstehend beschriebenen Rechtsdrehung des Rotors 1 befinden sich 10 Wicklungen des Fadens 10 auf dem Ring 2 und die Abbindestelle 16 wurde mit 10 Wicklungen des Fadens 10 abgebunden.

Nachdem die Abbindestelle 16 abgebunden wurde, bewegt sich die Wurstkette durch Ein- bzw. Abfüllen weiterer Masse wie oben beschrieben in axialer Richtung, d.h. in der Figur nach links, weiter, bis die nächste gewünschte Abbindestelle (nicht in der Figur gezeigt) so positioniert ist, dass sie abgebunden werden kann. Wie links in der Figur erkennbar, wird der Faden 10 entlang der Würste 19, also von der Abbindestelle 16 (ganz links in der Figur) über die Abbindestelle 17 (mittig in der Figur) zu der Abbindestelle 16 (rechts in der Figur, im Abbinden begriffen) geführt. Dies gilt natürlich für die gesamte herzustellende Wurstkette. Bei der Axialbewegung nach links wird daher bei vorzugsweise stillstehendem Rotor 1 die Bremse 6 gelöst. Die Zuführeinrichtung 9 führt einen Fadenabschnitt auf den Ring 2 zu, dessen Länge zumindest einem Abstand zweier benachbarter Abbindestellen entspricht. Vorzugsweise wird hierbei ein Fadenabschnitt zugeführt, dessen Länge grösser ist als der Abstand zweier benachbarter Abbindestellen, beispielsweise um bis zu 10 % oder 20% grösser. Der Grund hierfür ist, dass die Würste 19 durch den Faden 10, welcher die Abbindestellen verbindet, nicht gebogen werden sollen. Daher muss dieser Fadenabschnitt möglichst schlaff sein.

Nachdem die nächstkommende Abbindestelle (nicht in der Figur gezeigt) positioniert wurde und die Verdrängerpaare 13, 14 wie bereits beschrieben die Abbindestelle geschaffen haben, erfolgt ein Abbinden wie ebenfalls bereits beschrieben, mit dem Unterschied, dass der Rotor 1 sich nun entgegengesetzt, also im vorliegenden Beispiel linksherum dreht. Für jede volle Umdrehung des Rotors 1 in Linksrichtung wird ein etwa 346 Millimeter langer Abschnitt des Fadens 10 von dem Ring 2 abgewickelt. Gleichzeitig werden etwa 13 Millimeter Faden 10 um die Abbindestelle gewickelt. Die Differenz, also etwa 333 Millimeter Faden 10, welche zuvor um den Ring 2 geschlungen war, wird mit Hilfe der Zuführeinrichtung 9 zurückgeschoben bzw. vom Ring 2 entfernt und in den Ausgleichsbehälter 12 befördert. Hierzu dreht sich die Zuführeinrichtung 9 rückwärts. Vorzugsweise werden natürlich beim Abbinden durch Linksdrehung gleich viele Umdrehungen vollführt wie beim Abbinden der vorangehenden Abbindestelle 16 mit Rechtsdrehungen. Auf diese Weise wird sichergestellt, dass sich am Ende der letzten Linksdrehung keine Fadenwicklung mehr auf dem Ring 2 befindet.

Nachdem die Abbindestelle mittels Linksdrehung abgebunden wurde, wird die Wurstkette wie bereits beschreiben axial weiterbewegt, und die folgende Abbindestelle kann mittels Rechtsdrehung des Rotors 1 abgebunden werden. Diese Prozessfolge wiederholt sich entsprechend, d.h. das Abbinden findet durch abwechselndes Links- und Rechtsdrehen des Rotors 1 statt.

Bei dem nächsten Abbinden mit einer Rechtsdrehung, welches auf die vorstehend beschriebene Linksdrehung folgt, wird natürlich zunächst der im Ausgleichsbehälter 12 zwischengelagerte Faden 10 verbraucht.

Es ist zu beachten, dass die Figur eine Momentaufnahme während einer Rechtsdrehung zeigt, da der Faden 10 erkennbar mehrfach um den Ring 2 gewunden ist.

Obwohl nur ein bevorzugtes Ausführungsbeispiel der Erfindung beschrieben und dargestellt wurde, ist es offensichtlich, dass der Fachmann zahlreiche Modifikationen hinzufügen kann, ohne Wesen und Umfang der Erfindung zu verlassen. Einige dieser Modifikationen sind nachfolgend beschrieben.

Die Fadenrolle 15, die Zuführeinrichtung 9 und der Ausgleichsbehälter 12 können beliebig ausgestaltet sein. Es kann sich um separate Bauteile handeln, diese können aber auch fest mit der Vorrichtung verbunden sein. Wesentlich ist hierbei nur, dass die vorgenannten Bauteile vorzugsweise nicht am Rotor 1 befestigt sind, womit dessen Gewicht möglichst gering gehalten wird. Vorzugsweise sorgt die Zuführeinrichtung 9 für eine konstante Vorspannung des Fadens 10 zwischen dem Ring 2 bzw. dem Aufnahmeabschnitt 18 und der Zuführeinrichtung 9.

Es versteht sich, dass die Anzahl Wicklungen bzw. Umdrehungen des Rotors 1, welche zum Abbinden einer einzelnen Abbindestelle benötigt werden, individuell eingestellt werden kann. In der Regel werden je nach Wurstsorte etwa 1 bis 20 Wicklungen benötigt. Die vorstehend geschilderten Zahlenwerte für die Umdrehungen und den Fadenverbrauch stellen damit nur ein erläuterndes und nicht einschränkendes Beispiel dar. Entsprechendes gilt für die Grössenangaben. Selbstverständlich kann der Ring 2 bzw. auch der Aufnahmeabschnitt 18 einen anderen Umfang als beispielsweise 110 Millimeter aufweisen. Es sei auch erwähnt, dass zum Abbinden nicht zwangsweise volle Umdrehungen durchgeführt werden müssen. Es könnte auch ein Abbinden mit beispielsweise 12,5 Umdrehungen je Abbindestelle erfolgen. Die besonderen Vorteile der vorliegenden Erfindung, nämlich das geringe maximale Gewicht des Fadens 10 auf dem Rotor 1, ergeben sich jedoch in allen Ausführungsbeispielen insbesondere dann, wenn die Anzahl aufeinanderfolgender Links- und RechtsDrehungen identisch ist. Nur dann wird während den Rechtsdrehungen ein Fadenabschnitt auf den Ring 2 oder den Aufnahmeabschnitt 18 aufgewickelt, welcher anschliessend während der Linksdrehungen wieder entfernt wird.

Selbstverständlich wurde der Drehsinn, d.h. die Links- bzw. Rechtsdrehung im vorgenannten Beispiel, willkürlich ausgewählt, um das Prinzip der vorliegenden Erfindung zu erläutern. Das Verfahren kann auch so ausgestaltet sein, dass der Faden 10 während der Linksdrehung auf den Ring 2 oder den Aufnahmeabschnitt 18 aufgewickelt und während der Rechtsdrehung wieder abgewickelt wird.

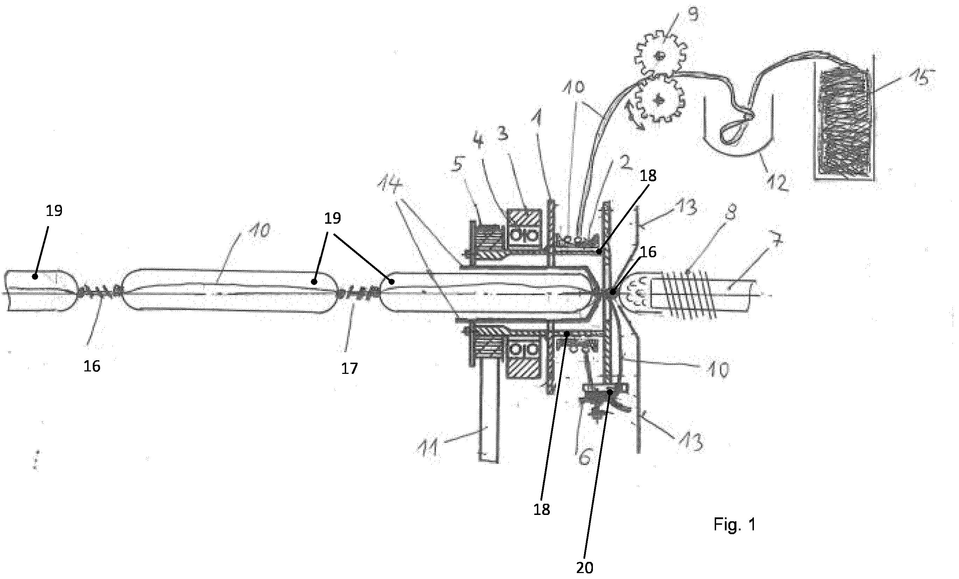

Bauteile der erfindungsgemässen Vorrichtung, die identisch in der Vorrichtung gemäss der EP 0 865 732 A1 vorhanden sind, entsprechen in ihrer Funktion vorzugsweise den dort gezeigten Bauteilen. Entsprechendes gilt auch für die Verfahrensschritte, welche von diesen Bauteilen bewirkt werden. Nur beispielhaft sei hier auf den Antrieb des Rotors 1, beispielsweise einen Servomotor, auf das Einfüllrohr 7, auf die als Klemmzangen bzw. Hebel ausgebildeten Verdränger 13, 14, auf das Wälzlager 4 und auf die Bremse 6 verwiesen. Diese Bauteile sind der EP 0 865 732 A1, beispielsweise in Bezug auf die dort gezeigten Figuren 1 und 10 zu entnehmen.

Es kann an **zusätzliche** Verfahrensschritte und/oder Vorrichtungsmerkmale gedacht sein:
Der Aufnahmeabschnitt 18 bzw. der Rotor 1 kann über ansteuerbare Greifer, Bolzen, Bremsen oder dergleichen verfügen, welche den Ring 2 während einer Drehung des Rotors 1 drehfest halten und während eines Stillstands des Rotors 1 eine Rotation des Rings 2 relativ zum Rotor 1 zulassen. Ferner kann auch an ein auf dem Aufnahmeabschnitt 18 oder anderswo auf dem Rotor 1 vorgesehenes Lager gedacht sein, um eine möglichst reibungsfreie Rotation des Rings 2 relativ zum Rotor 1 zu ermöglichen, wenn dieser stillsteht.

Hinsichtlich des Abbindens sind zahlreiche Variationen denkbar. So kann daran gedacht sein, eine Abbindestelle zwischen zwei Würsten 19 zweifach abzubinden, wobei beide Abbindungen jeweils nahe an einer der beiden Wurstenden erfolgen. Hierfür werden also beispielsweise an jeder Abbindestelle zwei Mal zehn Wicklungen durchgeführt. Dies kann ein späteres Durchschneiden der Würste 19 ohne Austritt der Fleischmasse bzw. des Bräts gewährleisten. Hierfür würde die Abbindestelle zunächst so positioniert, dass ein Abbinden nahe einer in der Figur links befindlichen Wurst 19 erfolgt. Daraufhin würde die Abbindestelle so positioniert, dass ein Abbinden nahe einer in der Figur rechts befindlichen Wurst 19 erfolgt. Erst danach würde die Wurstkette durch den Druck der über das Einfüllrohr 7 eintretenden Masse soweit nach links weiterbewegt, dass die darauffolgende Abbindestelle von den Verdrängerpaaren 13, 14 geschaffen werden kann.

Es kann auch daran gedacht sein, die Abbindestelle während des Abbindens in der Figur langsam nach links zu bewegen, um die gesamte Abbindestelle mit Faden 10 zu umwickeln.

Vor dem Abbinden der allerersten Abbindestelle einer Wurstkette kann der Faden 10 so eingefädelt oder beispielsweise händisch ausgerichtet werden, dass die Vorrichtung die vorstehend beschriebenen Schritte automatisch durchführen kann.

Mehrere der genannten Bauteile und Verfahrensschritte sind **optional:**
Der Ring 2 kann auch weggelassen werden. Der Faden 10 würde dann um den Aufnahmeabschnitt 18 gewickelt. Vorzugsweise ist dessen Oberflächenbeschaffenheit, insbesondere hinsichtlich seiner Reibungseigenschaften, dann so ausgewählt, dass der Faden 10 sich relativ zum Aufnahmeabschnitt 18 bewegen kann, da beispielsweise bei jeder Rechtsdrehung der Faden 10 sich zwar gleichsinnig mit dem Rotor 1 aber etwas schneller als dieser bewegt, wie vorstehend geschildert. Hierzu muss der Faden 10 sich relativ zum Aufnahmeabschnitt 18 bewegen können.

Die Bremse 6 kann auch weggelassen werden. Stattdessen kann nämlich die Zuführeinrichtung 9 die Straffung des Fadens 10 übernehmen. Dies gilt insbesondere, da der Faden 10 typischerweise nur etwa zehn Mal um den Rotor 1 bzw. dessen Aufnahmeabschnitt 18 oder den dort befindlichen Ring 2 gewickelt ist und daher nicht zwangsweise allein durch die zwischen den Wicklungen und dem Aufnahmeabschnitt 18 bzw. dem Ring 2 wirkende Reibung gehalten wird. Eine von der Zuführeinrichtung 9 bewirkte Straffung des Fadens 10 wirkt sich daher auch noch auf den Fadenabschnitt aus, welcher um die Abbindestelle geschlungen wird.

Die Führungseinrichtung 20 kann beliebig ausgestaltet sein. Sie muss nicht Bestandteil der optionalen Bremse 6 sein. Beispielsweise kann eine einfache Öffnung nahe dem äusseren Umfang des Rotors 1 die Funktion der Führungseinrichtung 20 übernehmen. Als Führungseinrichtung 20 kommt jede beliebige Einrichtung in Frage, die gegenüber dem Faden 10 als Mitnehmer wirkt, sobald der Rotor 1 sich dreht.

Der Kern der vorliegenden Erfindung liegt im oben beschriebenen Abbindeverfahren bzw. den zugehörigen Vorrichtungskomponenten. Sämtliche nicht am Abbindevorgang beteiligten Verfahrensschritte und Vorrichtungsmerkmale sind daher als zwar bevorzugt, aber dennoch optional zu betrachten. Beispielsweise handelt es sich hierbei um das Einfüllrohr 7 und den Antrieb des Rotors 1.

**Bezugszeichenliste**

| | | | | | |
|---|---|---|---|---|---|
| 1 | Rotor / Tragring | 34 | | | |
| 2 | Ring für die Fadenaufwicklung | 35 | | | |
| 3 | Gehäuse | 36 | | | |
| 4 | Wälzlager | 37 | | | |
| 5 | Riemenscheibe | 38 | | | |
| 6 | Schwenkbare Hebel / Bremse | 39 | | | |
| 7 | Einfüllrohr | 40 | | | |
| 8 | Haut | 41 | | | |
| 9 | Zuführeinrichtung | 42 | | | |
| 10 | Faden | 43 | | | |
| 11 | Zahn riemen | 44 | | | |
| 12 | Ausgleichsbehälter | 45 | | | |
| 13 | Statisches Verdrängerpaar (vordere Klemmzange/Hebel) | 46 | | | |
| 14 | Dynamisches Verdrängerpaar (hintere Klemmzange/Hebel) | 47 | | | |
| 15 | Grosse Spule / Fadenrolle | 48 | | | |
| 16 | Abbindestelle rechtsgedreht | 49 | | | |
| 17 | Abbindestelle linksgedreht | 50 | | | |
| 18 | Aufnahmeabschnitt | 51 | | | |
| 19 | Wurst | 52 | | | |
| 20 | Führungseinrichtung | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Abbinden mehrerer Portionen von einer in eine Haut (8) gefüllten Masse an dafür vorgesehenen Abbindestellen mit einem Faden (10), die Vorrichtung umfassend einen Rotor (1) sowie eine mit dem Rotor (1) in Verbindung stehende Führungseinrichtung (20) zur Führung des Fadens (10), wobei der Rotor (1) einen Aufnahmeabschnitt (18) zur Aufnahme mehrere Wicklungen des Fadens (10) aufweist, wobei die Vorrichtung so eingerichtet ist, dass der Faden (10) bei einer Umdrehung des Rotors (1) von dem Aufnahmeabschnitt (18) durch die Führungseinrichtung (20) geleitet und um die Abbindestelle gewickelt wird,
**dadurch gekennzeichnet, dass**
die Vorrichtung ferner über ein Reservoir zur Aufnahme des Fadens (10) verfügt, wobei die Vorrichtung ausserdem über eine Zuführeinrichtung (9) verfügt, wobei die Zuführeinrichtung (9) eingerichtet ist, um entweder Faden (10) aus dem Reservoir (12, 15) zu dem Aufnahmeabschnitt (18) zuzuführen oder von dem Aufnahmeabschnitt (18) zu entfernen.

2. Vorrichtung gemäss Anspruch 1, wobei der Aufnahmeabschnitt (18) geeignet ist, einen Ring (2) aufzunehmen, welcher wiederum mehrere Wicklungen des Fadens (10) aufnehmen kann.

3. Vorrichtung gemäss einem der vorhergehenden Ansprüche **gekennzeichnet durch** eine Bremse (6), welche dem Rotor (1) zugeordnet ist.

4. Verfahren zum Abbinden mehrerer Portionen von einer in eine Haut (8) gefüllten Masse an dafür vorgesehenen Abbindestellen mit einer Vorrichtung gemäss einem der vorangehenden Ansprüche, das Verfahren umfassend die folgenden Schritte:
- Positionieren einer ersten Abbindestelle
- Drehung des Rotors (1) in einer ersten Drehrichtung und gleichzeitiges Vorschieben des Fadens (10) durch die Zuführeinrichtung (9), wobei die Zuführeinrichtung (9) Faden (10) aus dem Reservoir auf den Aufnahmeabschnitt (18) führt und wobei durch die Drehung des Rotors (1) Faden (10) von dem Aufnahmeabschnitt (18) durch die Führungseinrichtung (20) zur Abbindestelle geführt und während der Drehung des Rotors (1) um die Abbindestelle gewickelt wird
- Positionieren einer zweiten Abbindestelle und gleichzeitiges Vorschieben des Fadens (10) durch die Zuführeinrichtung (9), um den Abstand zwischen der ersten und der zweiten Abbindestelle zu überbrücken
- Drehung des Rotors (1) in einer zweiten Drehrichtung entgegen der ersten Drehrichtung und gleichzeitiges Zurückschieben des Fadens (10) durch die Zuführeinrichtung (9), wobei die Zuführeinrichtung (9) Faden (10) aus dem Aufnahmeabschnitt (18) entfernt und wobei durch die Drehung des Rotors (1) Faden (10) von dem Aufnahmeabschnitt (18) durch die Führungseinrichtung (20) zur Abbindestelle geführt und während der Drehung des Rotors (1) um diese gewickelt wird.

5. Verfahren nach Anspruch 4, **dadurch gekennzeichnet, dass** nach der Drehung des Rotors (1) in der zweiten Drehrichtung eine Vielzahl weiterer Abbindestellen positioniert und abgebunden werden, wobei eine dritte und alle weiteren ungeradzahligen Abbindestellen identisch gehandhabt werden wie die erste Abbindestelle und wobei eine zweite und alle weiteren geradzahligen Abbindestellen identisch gehandhabt werden wie die zweite Abbindestelle.

6. Verfahren nach einem der Ansprüche 4 oder 5, **dadurch gekennzeichnet, dass** die Abbindestellen vor oder während des Positionierens geschaffen werden, indem Masse innerhalb der Haut (8) von der gewünschten Abbindestelle verdrängt wird.

7. Verfahren nach zumindest einem der Ansprüche 4 bis 6, **dadurch gekennzeichnet, dass** eine Bremse (6) während der Umwicklung der Abbindestelle den Faden (10) strafft und während der Positionierung der Abbindestelle gelöst ist.

8. Verfahren nach zumindest einem der Ansprüche 5 bis 7, **dadurch gekennzeichnet, dass** die Zuführeinrichtung (9) während der während der Umwicklung der Abbindestelle den Faden (10) strafft.

## Claims

1. Device for binding several portions of a mass filled into a skin (8) at tying points provided therefor with a thread (10), the apparatus comprising a rotor (1) and a guide means (20) associated with the rotor (1) for guiding the thread (10), wherein the rotor (1) has a receiving section (18) for receiving a plurality of windings of the thread (10), the apparatus being arranged such that, on one revolution of the rotor (1), the thread (10) is passed from the receiving section (18) through the guide means (20) and wound around the tying point,
**characterised in that**
the device further comprises a reservoir for receiving the thread (10), the device further comprising feeding means (9), the feeding means (9) being arranged to either feed thread (10) from the reservoir (12, 15) to the receiving section (18) or to remove it from the receiving section (18).

2. Device according to claim 1, wherein the receiving section (18) is adapted to receive a ring (2) which in turn can receive several windings of the thread (10).

3. Device according to any of the preceding claims **characterized by** a brake (6) associated with the rotor (1).

4. Method for binding several portions of a mass filled into a skin (8) at tying points provided for this purpose with a device according to one of the preceding claims, the method comprising the following steps:
- positioning of a first tying point
- rotating of the rotor (1) in a first direction of rotation and simultaneous advancement of the thread (10) through the feeding means (9), wherein the feeding means (9) guides thread (10) from the reservoir onto the receiving section (18) and wherein the rotation of the rotor (1) guides thread (10) from the receiving section (18) through the guiding device (20) to the tying point and winds it around the tying point during the rotation of the rotor (1)
- positioning of a second tying point and simultaneous advancement of the thread (10) through the feeding means (9) to bridge the distance between the first and the second tying point
- rotating of the rotor (1) in a second direction of rotation counter to the first direction of rotation and simultaneous pushing back of the thread (10) by the feeding means (9), wherein the feeding means (9) removes thread (10) from the receiving section (18) and wherein, by the rotation of the rotor (1), thread (10) is guided from the receiving section (18) through the guide means (20) to the tying point and is wound around this during the rotation of the rotor (1).

5. Method according to claim 4, **characterized in that** after the rotation of the rotor (1) in the second direction of rotation a plurality of further tying points are positioned and tied, wherein a third and all further odd-numbered tying points are handled identically as the first tying point and wherein a second and all further even-numbered tying points are handled identically as the second tying point.

6. Method according to one of claims 4 or 5, **characterized in that** the tying points are created before or during positioning by displacing mass within the skin (8) from the desired tying point.

7. Method according to at least one of claims 4 to 6, **characterized in that** a brake (6) tightens the thread (10) during the wrapping of the tying point and is released during the positioning of the tying point.

8. Method according to at least one of claims 5 to 7, **characterised in that** the feeding means (9) tightens the thread (10) during the winding of the tying point.

## Revendications

1. Dispositif pour lier plusieurs portions d'une masse ensachée dans un boyau (8) à des points de liage prévus à cet effet à l'aide d'un fil (10), le dispositif comportant un rotor (1) ainsi qu'un dispositif de guidage (20) relié au rotor (1) pour guider le fil (10), dans lequel le rotor (1) présente un segment de réception (18) destiné à recevoir plusieurs enroulements du fil (10), dans lequel le dispositif est conçu de sorte que le fil (10) soit guidé, lors d'une rotation du rotor (1), à partir du segment de réception (18) par le dispositif de guidage (20) et enroulé autour du point de liage,
**caractérisé par le fait que**
le dispositif dispose par ailleurs d'un réservoir destiné à recevoir le fil (10), le dispositif disposant en outre d'un dispositif d'alimentation (9), le dispositif d'alimentation (9) étant conçu pour soit alimenter du fil (10) du réservoir (12, 15) vers le segment de réception (18), soit pour le retirer du segment de réception (18).

2. Dispositif selon la revendication 1, dans lequel le segment de réception (18) convient pour recevoir un anneau (2) qui, à son tour, peut recevoir plusieurs enroulements du fil (10).

3. Dispositif selon l'une des revendications précédentes, **caractérisé par** un frein (6) qui est associé au rotor (1).

4. Procédé pour lier plusieurs portions d'une masse ensachée dans un boyau (8) à des points de liage prévus à cet effet à l'aide d'un dispositif selon l'une des revendications précédentes, le procédé comportant les étapes suivantes:
- positionnement d'un premier point de liage
- rotation du rotor (1) dans un premier sens de rotation et déplacement en avant simultané du fil (10) par le dispositif d'alimentation (9), où le dispositif d'alimentation (9) guide le fil (10) du réservoir vers le segment de réception (18) et où par la rotation du rotor (1) le fil (10) est guidé par le dispositif de guidage (20) du segment de réception (18) vers le point de liage et est, pendant la rotation du rotor (1), enroulé autour du point de liage
- positionnement d'un deuxième point de liage et déplacement en avant simultané du fil (10) par le dispositif d'alimentation (9) pour ponter la distance entre le premier et le deuxième point de liage
- rotation du rotor (1) dans un deuxième sens de rotation à l'encontre du premier sens de rotation et repoussée simultanée du fil (10) par le dispositif d'alimentation (9), où le dispositif d'alimentation (9) retire le fil (10) du segment de réception (18) et où par la rotation du rotor (1) le fil (10) est guidé par le dispositif de guidage (20) du segment de réception (18) vers le point de liage et est, pendant la rotation du rotor (1), enroulé autour du point de liage.

5. Procédé selon la revendication 4, **caractérisé par le fait que**, après la rotation du rotor (1) dans le deuxième sens de rotation, une pluralité d'autres points de liage sont positionnés et liés, dans lequel un troisième et tous les autres points de liage impairs sont traités de manière identique au premier point de liage et dans lequel un deuxième et tous les autres points de liage pairs sont traités de manière identique au deuxième point de liage.

6. Procédé selon l'une des revendications 4 ou 5, **caractérisé par le fait que** les points de liage sont créés avant ou pendant le positionnement en repoussant de la masse à l'intérieur du boyau (8) éloignée du point de liage souhaité.

7. Procédé selon au moins l'une des revendications 4 à 6, **caractérisé par le fait qu'**un frein (6) serre le fil (10) pendant l'enroulement du point de liage et est libéré pendant le positionnement du point de liage.

8. Procédé selon au moins l'une des revendications 5 à 7, **caractérisé par le fait que** le dispositif d'alimentation (9) serre le fil (10) pendant l'enroulement du point de liage.
